# EUROPÄISCHE PATENTSCHRIFT

(11) **EP 1 683 702 B1**
(45) Veröffentlichungstag und Bekanntmachung des Hinweises auf die Patenterteilung: **16.01.2008**
(21) Anmeldenummer: 05023210.7
(22) Anmeldetag: 25.10.2005
(51) Int. Cl.: B62D 1/184

(54) **Klemmvorrichtung für eine Lenksäule**
Clamping device for steering column
Dispositif de serrage pour colonne de direction

(30) Priorität: 20.01.2005 DE 102005002620
(43) Veröffentlichungstag der Anmeldung: 26.07.2006
(73) Patentinhaber: Schaeffler KG, 91074 Herzogenaurach (DE)
(72) Erfinder: Hochmuth, Harald, 91469 Hagenbüchach (DE); Wiesneth, Bernhard, 91054 Erlangen (DE); Wilhelm, Sigurd, 91074 Herzogenaurach (DE); Zernickel, Alexander, 91074 Herzogenaurach (DE)

(56) Entgegenhaltungen:
- DE-A1- 10 153 889
- DE-A1- 10 304 640
- DE-A1- 10 316 190
- US-A- 5 088 767

## Beschreibung

### Gebiet der Erfindung

Die Erfindung betrifft eine Klemmvorrichtung, insbesondere für eine Lenksäule, mit einer ersten Rampenscheibe, die gegenüber einer zweiten Rampenscheibe zwischen einer Löseposition und einer Klemmposition unter Veränderung des Abstands zwischen den Rampenscheiben verdrehbar ist.

### Hintergrund der Erfindung

Klemmvorrichtungen dieser Art kommen beispielsweise bei Kraftfahrzeugen zum Einsatz und ermöglichen die individuelle Anpassung der Lenkradposition an die Erfordernisse des Fahrers. Zur Einstellung der Lage des Lenkrads wird die Klemmvorrichtung durch die Betätigung eines Hebels in die Löseposition gebracht, in der sowohl die Höhe als auch die Neigung des Lenkrads verstellbar ist. Nach dem Einstellen des Lenkrads wird die Klemmvorrichtung wieder in die Klemmposition gebracht.

Aus der US 5,394,767 ist eine Klemmvorrichtung bekannt, bei der der Abstand zwischen einer ersten Scheibe und einer zweiten Scheibe dadurch verändert wird, dass Kugeln bei einer Verdrehung der ersten Scheibe gegenüber der zweiten Scheibe eine Rampe hochgerollt werden, die auf der zweiten Scheibe vorgesehen ist. Nachteilig ist dabei allerdings, dass aufgrund der hohen erforderlichen Klemmkräfte die Scheiben aus Metall hergestellt werden müssen, was wegen der kugelförmigen Aussparungen, die für die Führung der Kugeln erforderlich sind, zu hohen Kosten führt.

Aus der DE 103 04 640 A1 ist eine Klemmvorrichtung für Lenksäulen bekannt, bei der zwei gegenüberliegende Rampenscheiben und ein zwischenliegendes Führungselement vorgesehen sind, das als Kugelkäfig dient. Allerdings weist lediglich eine Rampenscheibe Ausformungen für Wälzkörper bzw. Kugeln auf, sodass diese nicht zwangsgeführt werden. Es könnte daher der Fall auftreten, dass die Kugeln beim Loslassen der Klemmvorrichtung nicht wieder in ihre Ausgangsposition zurückkehren.

In der DE 101 53 889 A1 wird ein Kugelrampensteller für einen Verriegelungsmechanismus beschrieben. Diese Klemmvorrichtung umfasst zwei Rampenscheiben mit zueinander gegenläufig angeordneten Hubrampen für Kugeln, die nicht in Umfangrichtung angeordnet sind. Optional ist ein elastisch verformbarer Kugelhalter oder Käfig vorgesehen, um eine Vorspannkraft auf die Kugeln auszuüben. Allerdings kommt es bei dieser Klemmvorrichtung zu einem unerwünschten Zurückspringen, wenn der Betätigungshebel losgelassen wird.

### Zusammenfassung der Erfindung

Der Erfindung liegt daher das Problem zugrunde, eine Klemmvorrichtung anzugeben, die eine Zwangsführung der Wälzkörper aufweist und bei der ein unerwünschtes Zurückschnappen des Wälzkörpers verhindert wird.

Zur Lösung dieses Problems ist bei einer Klemmvorrichtung der eingangs genannten Art vorgesehen, dass die erste Rampenscheibe und die zweite Rampenscheibe jeweils wenigstens zwei in Umfangsrichtung angeordnete Hubrampen für Wälzkörper und jeweils wenigstens eine Führungsausnehmung, vorzugsweise zwei in der Ebene der Rampenscheiben liegende, schräg angeordnete Führungsausnehmungen für Steuerelemente aufweist, die Hubrampen und die Führungsausnehmungen der ersten und der zweiten Rampenscheibe sind jeweils gegenläufig zueinander angeordnet, die Wälzkörper und die Steuerelemente sind in Ausnehmungen eines zwischen den Rampenscheiben angeordneten Haltelementes gehalten.

Bei der erfindungsgemäßen Klemmvorrichtung laufen Wälzkörper zwischen der ersten und der zweiten Rampenscheibe. Die Rampenscheiben weisen jeweils in Umfangsrichtung angeordnete Hubrampen für die Wälzkörper auf, sodass bei einer Relativdrehung der beiden Rampenscheiben eine axiale Abstandsveränderung zwischen den Rampenscheiben eintritt. Zwischen den Rampenscheiben ist ein Halteelement angeordnet, das ähnlich wie ein Lagerkäfig oder Kugelkäfig Ausnehmungen für die Wälzkörper und die Steuerelemente aufweist. Daneben weisen beide Rampenscheiben schräg angeordnete Führungsausnehmungen für Steuerelemente auf, die bei der ersten und der zweiten Rampenscheibe jeweils gegenläufig zueinander angeordnet sind. Die Steuerelemente werden durch die Führungsausnehmungen zwangsgeführt, das heißt bei einer Verdrehung der beiden Rampenscheiben werden die Steuerelemente ebenfalls verschoben. Durch die Verschiebung der Steuerelemente wird ein plötzliches und unerwünschtes Zurückschnappen der Wälzkörper in die Ausgangsposition verhindert.

Für die erfindungsgemäße Klemmvorrichtung sind kugelförmige oder zylindrische Wälzkörper besonders gut geeignet. Analog können die Steuerelemente der erfindungsgemäßen Klemmvorrichtung kugelförmig oder zylindrisch ausgebildet sein.

Gemäß einer vorteilhaften Weiterbildung der Erfindung kann das zylindrische Steuerelement in seinem mittleren Bereich eine umlaufende, an die Ausnehmung des Halteelements angepasste Nut aufweisen. Der mittlere Bereich des Steuerelements weist einen verringerten Durchmesser auf, sodass das Steuerelement in die Ausnehmung des Halteelements eingesetzt und von dem Halteelement geführt werden kann. Die Nut in dem mittleren Bereich des Steuerelements ist dabei an die Dicke des Halteelements angepasst, sodass die Bewegung des Steuerelements in axialer Richtung begrenzt wird.

Eine besonders präzise Führung der Wälzkörper der erfindungsgemäßen Klemmvorrichtung kann erzielt werden, wenn die Hubrampen eine sich kontinuierlich verändernde Kontur aufweisen. Besonders geeignet sind Hubrampen mit kalottenförmiger Kontur, die an die Größe der Wälzkörper, insbesondere der Kugeln, angepasst ist.

Bei der erfindungsgemäßen Klemmvorrichtung kann eine präzise Zwangsführung erzielt werden, wenn das Halteelement an die Kontur der Wälzkörper und der Steuerelemente angepasste Ausnehmungen aufweist. Dementsprechend kann das Haltelemente bei kugelförmigen Wälzkörpern runde Ausnehmungen aufweisen, bei kugelförmigen Steuerelementen kann das Halteelement nutartige Ausnehmungen aufweisen.

Eine besonders zuverlässige Funktion der Klemmvorrichtung lässt sich erzielen, wenn die in den Führungsausnehmungen der Rampenscheiben geführten Steuerelemente bei einer Verdrehung der Rampenscheibe in radial angeordneten Führungsausnehmungen des Halteelements nach außen oder innen bewegbar sind. Dazu können die Führungsausnehmungen der Rampenscheiben, in denen die Steuerelemente geführt sind, beispielsweise in einem Winkel von etwa 45° zur Radialrichtung verlaufen.

Wenn die Steuerelemente als Zylinder mit einer mittleren Nut ausgebildet sind, kann das Halteelement nach außen offene Nuten als Führungsausnehmungen aufweisen, um die Montage der Steuerelemente zu vereinfachen.

Bei der erfindungsgemäßen Klemmvorrichtung kann es vorgesehen sein, dass die Rampenscheiben ein Verbindungsmittel aufweisen, um die Rampenscheiben, das Halteelement, die Wälzkörper und die Steuerelemente zu einer Baugruppe zu verbinden. Vorzugsweise kann das Verbindungsmittel als Steck-, Rast- oder Klipsverbindung ausgebildet sein.

Die erfindungsgemäße Klemmvorrichtung kann vorzugsweise wenigstens zwei Wälzkörper und wenigstens ein Steuerelement umfassen. Die Rampenscheiben und/oder das Haltelement können aus Metall oder aus einem Kunststoffmaterial bestehen.

### Kurze Beschreibung der Zeichnungen

Weitere Vorteile und Einzelheiten der Erfindung werden anhand von Ausführungsbeispielen unter Bezugnahme auf die Figuren erläutert. Die Figuren sind schematische Zeichnungen und zeigen:
- Fig. 1: eine Explosionszeichnung einer Klemmvorrichtung gemäß einem ersten Ausführungsbeispiel der Erfindung;
- Fig. 2a: die Klemmvorrichtung in gelöster Position;
- Fig. 2b: die Klemmvorrichtung in geklemmter Position;
- Fig. 3: eine Explosionszeichnung einer Klemmvorrichtung gemäß einem zweiten Ausführungsbeispiel der Erfindung;
- Fig. 4: eine weitere Ansicht der in Fig. 3 gezeigten Klemmvorrichtung;
- Fig. 5a: die Klemmvorrichtung in gelöster Position; und
- Fig. 5b: die Klemmvorrichtung in geklemmter Position.

### Detaillierte Beschreibung der Zeichnungen

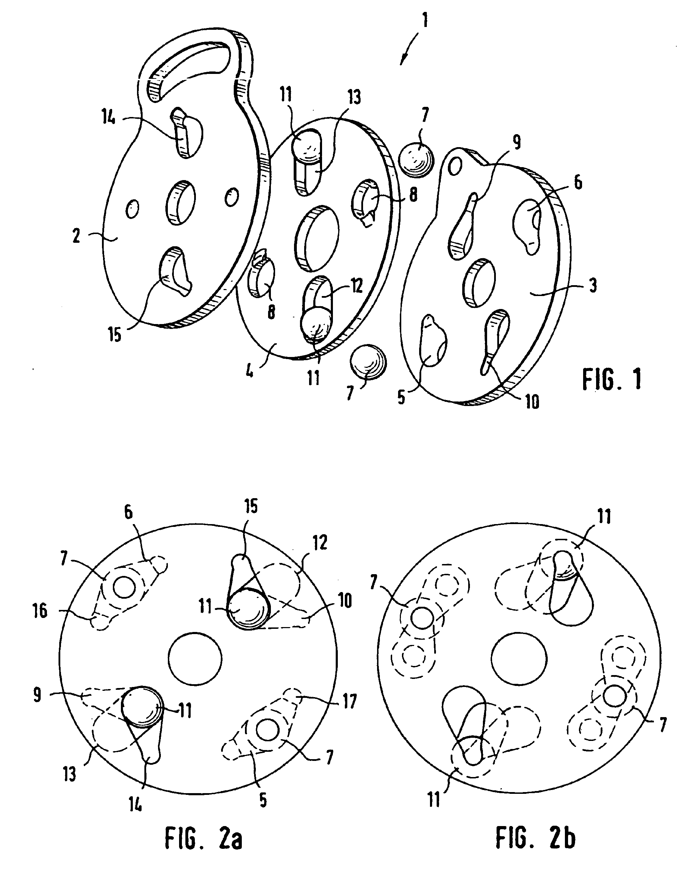

Fig. 1 zeigt eine Explosionszeichnung einer Klemmvorrichtung 1, bestehend aus einer Rampenscheibe 2, einer weiteren, gegenüberliegenden Rampenscheibe 3 und einem zwischen den Rampenscheiben 2, 3 angeordneten Haltelement 4. Das Halteelement 4 weist eine scheibenförmige Grundform auf.

Die Rampenscheibe 2, 3 und das Halteelement 4 besitzen eine zentrale Bohrung, durch die ein in Fig. 1 nicht dargestellter Zugbolzen hindurchführbar ist. Im eingebauten Zustand ist eine Rampenscheibe, beispielsweise Rampenscheibe 3, ortsfest befestigt, die andere Rampenscheibe 2 ist relativ dazu drehbar.

Die Rampenscheiben 2, 3 weisen an ihren Innenseiten jeweils zwei in Umfangsrichtung angeordnete Hubrampen 5, 6 auf. Jeweils eine Hubrampe der Rampenscheibe 2 und eine Hubrampe der Rampenscheibe 3 bilden dabei ein Rampenpaar, zwischen dem ein als Kugeln 7 ausgebildeter Wälzkörper geführt ist. Die in Umfangsrichtung verlaufenden Hubrampen 5, 6 bilden rampenartige Kugelbahnen, in denen die Kugeln 7 bei der Drehung der Rampenscheibe 2 geführt werden. Die Hubrampen 5, 6 sind dabei an die Form der Kugeln 7 angepasst und besitzen die Form einer Kalotte.

Das Halteelement 4 besitzt jeweils kreisförmige Ausnehmungen 8 für die Kugeln 7. An der Innenseite der Rampenscheibe 2 befinden sich ebenfalls Hubrampen für die Kugeln 7, die entgegengesetzt zu den Hubrampen 5, 6 angeordnet sind.

Die Hubrampe 3 weist darüber hinaus Führungsausnehmungen 9, 10 auf, die Öffnungen in der Rampenscheibe 3 bilden. Anders als die in Axialrichtung geneigten Hubrampen 5, 6 sind die ähnlich aussehenden Führungsausnehmungen 9, 10 als Durchgangsöffnungen ausgebildet, sodass sich die axiale Position eines in den Führungsausnehmungen 9, 10 geführten Steuerelements nicht ändert. In den Führungsausnehmungen 9, 10 werden als Kugeln 11 ausgebildete Steuerelemente geführt. Die Kugeln 11 laufen ihrerseits in Ausnehmungen des Halteelements 4, die als Führungsnuten 12, 13 ausgebildet sind. Die Führungsnuten 12, 13 erstrecken sich in Radialrichtung des Halteelements 4, sodass sich die Kugeln 11 bei einer Drehung der Rampenscheibe 2 relativ zur Rampenscheibe 3 radial verschieben können.

Ähnlich wie die Rampenscheibe 3 weist auch die Rampenscheibe 2 Führungsausnehmungen 14, 15 auf, die als Durchgangsöffnungen ausgebildet und entgegengesetzt zu den Führungsausnehmungen 9, 10 der Rampenscheibe 3 angeordnet sind.

Die Funktion der Klemmvorrichtung 1 wird anhand der Figuren 2a und 2b erläutert. Fig. 2a zeigt die wesentlichen Komponenten der Klemmvorrichtung in gelöster Position, in der die Rampenscheiben 2, 3 einen geringen axialen Abstand aufweisen.

Wie in Fig. 2a zu erkennen ist, befinden sich die Kugeln 7 in der tiefsten Position der Hubrampen 5, 6 der Rampenscheibe 3 und der Hubrampen 16, 17 der Rampenscheibe 2. In Fig. 2a ist auch erkennbar, dass die Führungsausnehmungen 9, 10 sich mit den jeweiligen Führungsausnehmungen 14, 15 der gegenüberliegenden Rampenscheibe 2 kreuzen. Die als Steuerelemente dienenden Kugeln 11 befinden sich an dem in Radialrichtung innenliegenden Ende der Führungsnuten 12, 13. Wenn die drehbare Rampenscheibe 2 betätigt wird, rollen die Kugeln 7 reibungsbedingt an den Hubrampen 6, 16 und 5, 17 hoch, das heißt die Kugeln 7 rollen aus den Kalotten in den Rampenscheiben 2, 3 heraus. Zeitgleich laufen die als Steuerelemente dienenden Kugeln 11 in den Führungsnuten 12, 13 des Halteelements 4 nach außen, da die jeweiligen Paare der Führungsausnehmungen 9, 14 und 10, 15 V-förmig angeordnet sind.

Fig. 2b zeigt die Klemmvorrichtung in geklemmter Position. Durch das Herausrollen der Kugeln 7 aus den Kalotten vergrößert sich der axiale Abstand zwischen den Rampenscheiben 2, 3, bis die Klemmvorrichtung 1 sich in vollständig geklemmter Position befindet. In dieser Lage sind die Kugeln 11 in den Führungsnuten 12, 13 radial nach außen gewandert. Die Kugeln 7 befinden sich ebenfalls an ihrer Extremposition zwischen den Hubrampen.

Bei einer Verkantung der Rampenscheiben 2, 3 zueinander während der Betätigung können sich die Reibverhältnisse derart ändern, dass ein Zurückschnappen der Kugeln 7 eintritt. Um ein Zurückschnappen zu verhindern ist eine Zwangsführung des Halteelements 4 durch die Führungsausnehmungen 9, 14 vorgesehen.

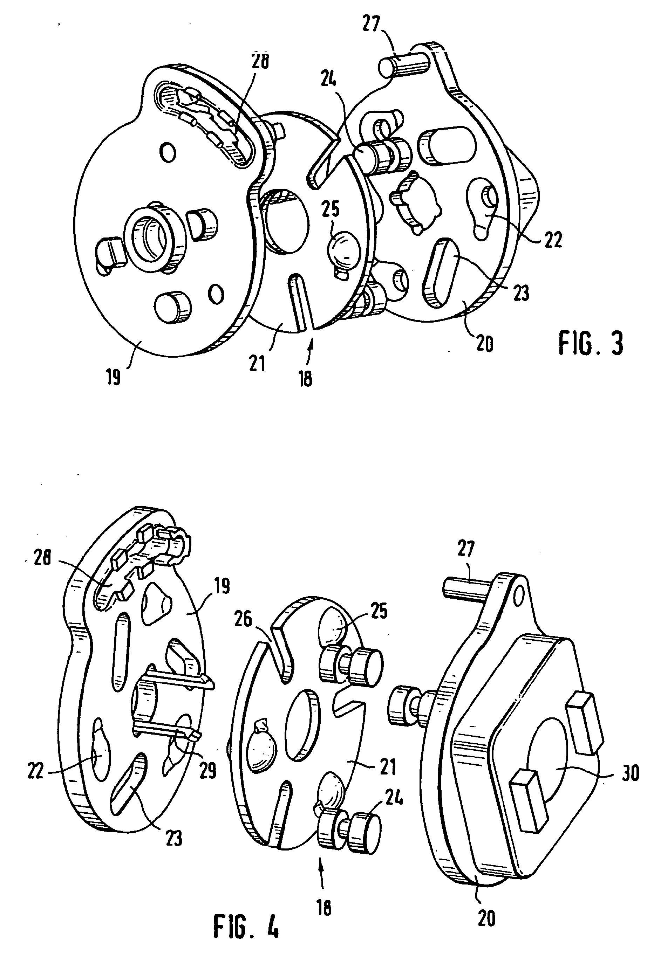

Fig. 3 zeigt eine perspektivische Ansicht eines zweiten Ausführungsbeispiels der Erfindung.

In Übereinstimmung mit dem ersten Ausführungsbeispiel umfasst die Klemmvorrichtung 18 Rampenscheiben 19, 20 zwischen denen ein Halteelement 21 angeordnet ist. Die Rampenscheiben 19, 20 weisen jeweils in Umfangrichtung verlaufende Hubrampen 22 und in der Scheibenebene schräg verlaufende Führungsausnehmungen 23 auf. Die Form und Position der Hubrampen 22 entspricht den Hubrampen des ersten Ausführungsbeispiels. Die Führungsausnehmungen 23 sind als Führungsnuten ausgebildet, in denen als Steuerstifte 24 ausgebildete Steuerelemente geführt sind. In dem dargestellten Ausführungsbeispiel werden drei Steuerstifte 24 verwendet, die sich mit drei Kugeln 25 abwechseln, die in den Hubrampen 22 geführt sind.

Der Steuerstift 24 besitzt eine zylindrische Form, der mittlere Abschnitt weist einen verringerten Durchmesser auf und entspricht näherungsweise der Dicke des Halteelements 21. Das Halteelement 21 weist drei über den Umfang verteilte nach außen offene Nuten 26 auf, in die jeweils ein Steuerstift 24 einsetzbar ist. Die Funktion beim Drehen der beweglichen Rampenscheibe entspricht im Wesentlichen derjenigen des ersten Ausführungsbeispiels. Die Rampenscheibe 20 ist ortsfest angebracht, demgegenüber ist die Rampenscheibe 19 drehbar. An der Rampenscheibe 20 ist außenseitig ein axial vorspringender Stift 27 angebracht, der in einer in Umfangsrichtung verlaufenden Nut 28 der Rampenscheibe 19 bewegbar ist, die seitlichen Begrenzungen der Nut 28 dienen als Anschläge für die Bewegung der Rampenscheibe 19.

Im Bereich des Zentrums der Rampenscheibe 19 sind zwei in Axialrichtung vorspringende Halteabschnitte 29 angeordnet, die im Bereich ihrer Endabschnitte eine radial nach außen vorspringende Verdickung aufweisen. Die Halteabschnitte 29 können in eine Öffnung 30 der Rampenscheibe 20 eingesetzt werden und verrasten dort.

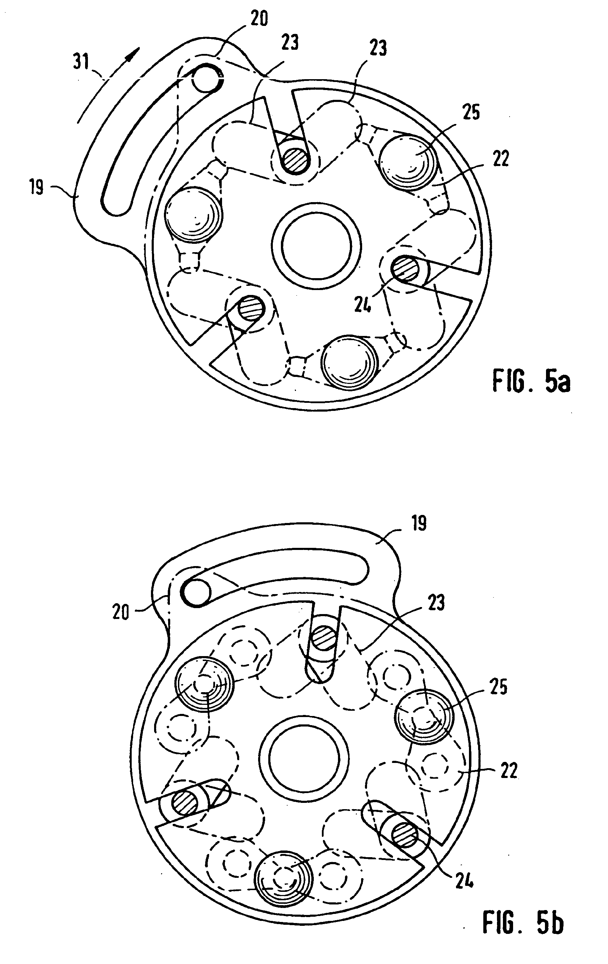

Fig. 5a zeigt die Klemmvorrichtung 18 in der Grundstellung, in der die Riemenscheiben gelöst sind. In dieser Lage ist die axiale Länge der Klemmvorrichtung 18 minimal, da die Kugeln 25 sich vollständig in den Kalotten der Hubrampen 22 befinden. Die Steuerstifte 24 befinden sich an ihrer radial innersten Position. Der mittlere Abschnitt liegt an dem inneren Ende der Nut 26 der Halteelements 21 an, die äußeren Endabschnitte des Steuerstifts 24 befinden sich an dem mittelpunktsnahen Ende der Führungsausnehmungen 23 in den Rampenscheiben 19, 20. Wenn die Rampenscheibe 19 aus der in Fig. 5a dargestellten Position in die Richtung des Pfeils 31 gedreht wird, rollen die Kugeln 25 entlang der Hubrampen 22 in die in Fig. 5b dargestellte Lage. Da die Hubrampen 22 gegenläufig angeordnet sind, vergrößert sich dabei der axiale Abstand zwischen den Rampenscheiben 19, 20, sodass der Verstellmechanismus für das Lenkrad in dieser Lage geklemmt wird. Gleichzeitig mit der Bewegung der Kugeln 25 bewegen sich die Steuerstifte 24 aus ihrer mittelpunktsnahen Position nach außen entlang der Nuten 26. Somit führen die Steuerstifte 24 bei einer Drehbewegung der Rampenscheibe 19 eine radiale Bewegung entlang der Nuten 26 nach außen oder nach innen durch. Die Bewegung der Steuerstifte 24 erfolgt zwangsläufig, da die äußeren Enden der Steuerstifte 24 in den entsprechenden Führungsausnehmungen 23 der Rampenscheiben 19, 20 geführt sind. Wenn die Drehbewegung der Rampenscheibe 19 plötzlich gestoppt wird oder der daran angebrachte Verstellhebel losgelassen wird, kommt es nicht zu einem Zurückschnappen der Kugeln 25 in die in Fig. 5a gezeigte Ausgangsposition oder eine andere, nicht vorhersehbare Lage, da die Steuerstifte 24 in den Nuten 26 gehalten sind und eine Bewegung in die umgekehrte Richtung verhindern.

### Bezugszahlen

- 1: Klemmvorrichtung
- 2: Rampenscheibe
- 3: Rampenscheibe
- 4: Halteelement
- 5: Hubrampe
- 6: Hubrampe
- 7: Kugeln
- 8: Ausnehmungen
- 9: Führungsausnehmungen
- 10: Führungsausnehmungen
- 11: Kugeln
- 12: Führungsnuten
- 13: Führungsnuten
- 14: Führungsausnehmungen
- 15: Führungsausnehmungen
- 16: Hubrampe
- 17: Hubrampe
- 18: Klemmvorrichtung
- 19: Rampenscheibe
- 20: Rampenscheibe
- 21: Halteelement
- 22: Hubrampe
- 23: Führungsausnehmungen
- 24: Steuerstifte
- 25: Kugeln
- 26: Nuten
- 27: Stift
- 28: Nut
- 29: Halteabschnitte
- 30: Öffnung
- 31: Pfeil

## Patentansprüche

1. Klemmvorrichtung, insbesondere für eine Lenksäule, mit einer ersten Rampenscheibe, die gegenüber einer zweiten Rampenscheibe zwischen einer Löseposition und einer Klemmposition unter Veränderung des Abstands zwischen den Rampenscheiben verdrehbar ist, **dadurch gekennzeichnet, dass** die erste Rampenscheibe (2, 19) und die zweite Rampenscheibe (3, 20) jeweils wenigstens zwei in Umfangsrichtung angeordnete Hubrampen (5, 6, 22) für Wälzkörper und jeweils wenigstens eine Führungsausnehmung, vorzugsweise zwei in der Ebene der Rampenscheiben (2, 3, 19) liegende, schräg angeordnete Führungsausnehmungen (9, 10, 23) für Steuerelemente aufweist, die Hubrampen (5, 6, 22) und die Führungsausnehmungen (9, 10, 23) der ersten und der zweiten Rampenscheibe (2, 3, 19, 20) sind jeweils gegenläufig zueinander angeordnet, die Wälzkörper und die Steuerelemente sind in Ausnehmungen (8, 23) eines zwischen den Rampenscheiben (2, 3, 19, 20) angeordneten Halteelements (4, 21) gehalten.

2. Klemmvorrichtung nach Anspruch 1, **dadurch gekennzeichnet, dass** ein Wälzkörper kugelförmig oder zylindrisch ausgebildet ist.

3. Klemmvorrichtung nach Anspruch 1 oder 2, **dadurch gekennzeichnet, dass** ein Steuerelement kugelförmig oder zylindrisch ausgebildet ist.

4. Klemmvorrichtung nach Anspruch 3, **dadurch gekennzeichnet, dass** das zylindrische Steuerelement als Steuerstift (24) ausgebildet ist und in seinem mittleren Bereich eine umlaufende, an die Ausnehmung des Halteelements (21) angepasste Nut aufweist.

5. Klemmvorrichtung nach einem der vorangehenden Ansprüche, **dadurch gekennzeichnet, dass** eine Hubrampe (5, 6, 22) eine sich kontinuierlich verändernde Kontur aufweist.

6. Klemmvorrichtung nach einem der vorangehenden Ansprüche, **dadurch gekennzeichnet, dass** eine Hubrampe (5, 6, 22) kalottenförmig ausgebildet ist.

7. Klemmvorrichtung nach einem der vorangehenden Ansprüche, **dadurch gekennzeichnet, dass** das Halteelement (4, 21) an die Kontur der Wälzkörper und Steuerelemente angepasste Ausnehmungen (8) aufweist.

8. Klemmvorrichtung nach einem der vorangehenden Ansprüche, **dadurch gekennzeichnet, dass** die in den Führungsausnehmungen (14, 15, 23) der Rampenscheiben (2, 3, 19, 20) geführten Steuerelemente bei einer Verdrehung einer Rampenscheibe (2, 19) in radial angeordneten Führungsnuten (12, 13, 26) des Halteelements (4, 19) nach außen oder innen bewegbar sind.

9. Klemmvorrichtung nach einem der vorangehenden Ansprüche, **dadurch gekennzeichnet, dass** Führungsnuten (26) des Halteelements (19) als nach außen offene Nuten ausgebildet sind.

10. Klemmvorrichtung nach einem der vorangehenden Ansprüche, **dadurch gekennzeichnet, dass** die Rampenscheiben (19, 20) ein Verbindungsmittel aufweisen, um die Rampenscheiben (19, 20), das Halteelement (21), die Wälzkörper und die Steuerelemente zu einer Baugruppe zu verbinden.

11. Klemmvorrichtung nach Anspruch 10, **dadurch gekennzeichnet, dass** das Verbindungsmittel als Steck-, Rast- oder Klipsverbindung ausgebildet sind.

12. Klemmvorrichtung nach einem der vorangehenden Ansprüche, **dadurch gekennzeichnet, dass** die Rampenscheiben (2, 3, 19, 20) und/oder das Halteelement (4, 19) aus Metall oder einem Kunststoffmaterial bestehen.

## Claims

1. Clamping device, in particular, for a steering column, said clamping device comprising a first ramped disk that is rotatable relative to a second ramped disk between a disengaged and a clamped position with variation of the distance between the clamped disks, **characterised in that** each of the first ramped disk (2, 19) and the second ramped disk (3, 20) comprises at least two lifting ramps (5, 6, 22) arranged in peripheral direction for rolling elements and at least one guide recess, preferably two guide recesses (9, 10, 23) for control elements, which guide recesses (9, 10, 23) are arranged at an inclination in the plane of the ramped disks (2, 3, 19), the lifting ramps (5, 6, 22) and the guide recesses (9, 10, 23) of the first and the second ramped disks (2, 3, 19, 20) are arranged, in each case, opposed to each other, the rolling elements and the control elements are retained in recesses (8, 23) of a retaining element (4, 21) that is arranged between the ramped disks (2, 3, 19, 20).

2. Clamping device according to claim 1, **characterised in that** a rolling element has a spherical or cylindrical configuration.

3. Clamping device according to claim 1 or 2, **characterised in that** a control element has a spherical or cylindrical configuration.

4. Clamping device according to claim 3, **characterised in that** the cylindrical control element is configured as a control pin (24) and comprises in its central region, a peripheral groove matched to the recess of the retaining element (21).

5. Clamping device according to one of the preceding claims, **characterised in that** a lifting ramp (5, 6, 22) has a continuously varying contour.

6. Clamping device according to one of the preceding claims, **characterised in that** a lifting ramp (5, 6, 22) has a concave configuration.

7. Clamping device according to one of the preceding claims, **characterised in that** the retaining element (4, 21) comprises recesses (8) matched to the contour of the rolling elements and of the control elements.

8. Clamping device according to one of the preceding claims, **characterised in that**, upon a rotation of a ramped disk (2; 19), the control elements guided in the guide recesses (14, 15, 23) of the ramped disks (2, 3, 19, 20) can be displaced outwards or inwards within radially arranged guide grooves (12, 13, 26) of the retaining element (4, 19).

9. Clamping device according to one of the preceding claims, **characterised in that** the guide grooves (26) of the retaining element (19) are configured as grooves that are open towards the outside.

10. Clamping device according to one of the preceding claims, **characterised in that** the ramped disks (19, 20) comprise a connecting means for connecting together the ramped disks (19, 20), the retaining element (21), the rolling elements and the control elements into a sub-assembly.

11. Clamping device according to claim 10, **characterised in that** the connecting means is configured as a plug-in connection, a latched connection or a clip connection.

12. Clamping device according to one of the preceding claims, **characterised in that** the ramped disks (2, 3, 19, 20) and/or the retaining element (4, 19) are made of a metal or a plastic material.

## Revendications

1. Dispositif de serrage, particulièrement pour une colonne de direction, ledit dispositif comprenant un premier disque à rampe qui peut tourner par rapport à un second disque à rampe entre une position de dégagement et une position de serrage avec variation de l'écart entre lesdits disques à rampe, **caractérisé en ce que** le premier disque (2, 19) à rampe et le second disque (3, 20) à rampe comprennent, à chaque fois, au moins deux rampes (5, 6, 22) de levée agencées en direction périphérique pour des corps roulants, et comprennent, en plus, à chaque fois, au moins, un évidement de guidage, de préférence, deux évidements (9, 10, 23) de guidage agencés en biais dans le plan des disques (2, 3, 19) à rampe pour des éléments de commande, **en ce que** les rampes (5, 6, 22) de levée et les évidements (9, 10, 23) de guidage du premier et du second disque (2, 3, 19, 20) à rampe sont agencés, à chaque fois, à l'opposé, l'un de l'autre, et **en ce que** les corps roulants et les éléments de commande sont retenus dans des évidements (8, 23) d'un élément (4, 21) de retenue agencé entre les disques (2, 3, 19, 20) à rampe.

2. Dispositif de serrage selon la revendication 1, **caractérisé en ce que**, un corps roulant est configuré en forme sphérique ou cylindrique.

3. Dispositif de serrage selon la revendication 1 ou 2, **caractérisé en ce que**, un élément de commande est configuré en forme sphérique ou cylindrique.

4. Dispositif de serrage selon la revendication 3, **caractérisé en ce que** l'élément de commande cylindrique est configuré sous la forme d'une goupille de commande (24) et comprend, dans sa région centrale, une rainure périphérique dont la forme est adaptée à celle de l'évidement de l'élément (21) de retenue.

5. Dispositif de serrage selon l'une des revendications précédentes, **caractérisé en ce que**, une rampe (5, 6, 22) de levée a un contour qui se varie de manière continue.

6. Dispositif de serrage selon l'une des revendications précédentes, **caractérisé en ce que**, une rampe (5, 6, 22) de levée est configurée en forme de calotte.

7. Dispositif de serrage selon l'une des revendications précédentes, **caractérisé en ce que** l'élément (4, 21) de retenue est adapté au contour des corps roulants et des éléments de commande.

8. Dispositif de serrage selon l'une des revendications précédentes, **caractérisé en ce que**, lors d'une rotation d'un disque (2, 19) à rampe, les éléments de commande guidés dans les évidements (14, 15, 23) de guidage des disques (2, 3, 19, 20) à rampe peuvent être déplacés vers l'extérieur ou vers l'intérieur dans des rainures (12, 13, 26) de guidage de l'élément (4, 19) de retenue qui sont agencées en direction radiale.

9. Dispositif de serrage selon l'une des revendications précédentes, **caractérisé en ce que** les rainures (26) de guidage de l'élément (19) de retenue sont configurées sous la forme de rainures ouvertes vers l'extérieur.

10. Dispositif de serrage selon l'une des revendications précédentes, **caractérisé en ce que** les disques (19, 20) à rampe comprennent un moyen de liaison pour relier ensemble, en sous-groupe, les disques (19, 20) à rampes, l'élément (21) de retenue, les corps roulants et les éléments de commande.

11. Dispositif de serrage selon la revendication 10, **caractérisé en ce que** le moyen de liaison est configuré sous la forme d'une liaison à enfichage, à encliquetage ou à clipsage.

12. Dispositif de serrage selon l'une des revendications précédentes, **caractérisé en ce que** les disques (2, 3, 19, 20) à rampe et/ou l'élément (4, 19) de retenue sont faits en métal ou en une matière synthétique.
